# EUROPEAN PATENT APPLICATION

(11) **EP 3 021 521 A1**
(43) Date of publication of application: **18.05.2016**
(21) Application number: 14306797.3
(22) Date of filing: 11.11.2014
(51) Int. Cl.: H04L 12/24, H04L 12/26

(54) **A method and system for scaling, telecommunications network and computer program product**

(71) Applicant: ALCATEL LUCENT, 92100 Boulogne-Billancourt (FR)
(72) Inventor: Sienel, Juergen, 70435 Stuttgart (DE); Lugones, Diego, Dublin, 15 (IE); Cherubini, Davide, Dublin, 15 (IE); Voith, Thomas, 70435 Stuttgart (DE); Braun, Stefanie, 70435 Stuttgart (DE); Riemer, Joachim, 70435 Stuttgart (DE); Hilt, Volker Friedrich, 70435 Stuttgart (DE)
(74) Representative: Mudge, Kevin

(57) **Abstract**

A method, in a virtualised system portion of a telecommunications network, for scaling one or more network functions forming at least one network service in response to a predicted variation in network traffic, the or each network function comprising multiple network elements executable in respective virtual machine (VM) instances of the virtualised system portion, the method comprising monitoring network resources and traffic to determine the actual load of the or each network function, generating data representing one or more traffic patterns for the or each network function, and scaling the or each network service by deploying, in parallel, one or more virtual machines instantiated over physical hardware of the network for respective ones of selected network elements of the multiple network elements.

## Description

### TECHNICAL FIELD

Aspects relate, in general, to a method and system for scaling a network function or service in a virtualised system portion of a telecommunications network, to a telecommunications network and to a computer program product.

### BACKGROUND

Typically, telecommunication network systems are designed and provisioned to cover worst-case traffic scenarios. In practice therefore, a number of network elements are deployed to provide an over-provisioning, which can amount to more than 50% of the actually required resources for the average or typical case. The rationale behind this approach is to enable fulfillment of service level agreement (SLA) levels. However, it comes at the expense of capital and operational expenditure, which are generally considered to become unaffordable in the years to come in view of the rate of traffic growth, mainly driven by mobile devices for example.

Virtualisation technologies can be used in telecommunications networks to execute network functions in virtual machines (VMs) in order to improve dependability, a quality of experience for an end user and reduce capital and operational expenditure of network operators for example. Such on-demand provisioning is based on system metrics like CPU, network or memory utilization for example of each individual VM.

### SUMMARY

According to an example, there is provided a method, in a virtualised system portion of a telecommunications network, for scaling one or more network functions forming at least one network service in response to a predicted variation in network traffic, the or each network function comprising multiple network elements executable in respective virtual machine (VM) instances of the virtualised system portion, the method comprising monitoring network resources and traffic to determine the actual load of the or each network function, generating data representing one or more traffic patterns for the or each network function, and scaling the or each network service by deploying, in parallel, one or more virtual machines instantiated over physical hardware of the network for respective ones of selected network elements of the multiple network elements. The selected network elements can be functionally linked network elements being operable to provide the service for the predicted variation in network traffic. Monitoring network resources for the or each network function can include receiving data representing parameters and events for traffic flow and bandwidth utilization for the network elements. The or each traffic pattern for the network function can be compared to multiple predetermined patterns to determine a match. The predetermined patterns can be generated using historic data representing traffic flow and mapping traffic flow patterns to subsequent load variations for a network service and/or network function for example. The match can be used to extrapolate a current traffic volume into an expected traffic volume for a given next period of time for the or each network function.

According to an example, there is provided a system including multiple virtual machines (VMs) in program execution on physical computing hardware supported by a hypervisor, respective virtual machines operable to execute multiple applications or application parts for one or more network functions of a virtualised system portion of a telecommunications network, the system including a network interface to monitor network resources and traffic for the or each network function, and an analytics module to generate data representing one or more traffic patterns for the or each network function using the network resource requests, wherein the system is operable to scale the or each network function in response to a predicted variation in network traffic by deploying, in parallel, one or more virtual machines for respective ones of selected network elements of the multiple network elements. The system can form part of a node in a telecommunications system or network. For example, the system can form part of a base station node in a wireless telecommunications network. The network interface can be operable to receive data representing parameters and events for traffic flow and bandwidth utilization for the network elements. The analytics module can compare the or each traffic pattern for the network function to multiple predetermined patterns and to determine a match. The analytics module can use the match to extrapolate a current traffic volume into an expected traffic volume for a given next period of time for the or each network function.

According to an example, there is provided a telecommunications network including a virtualised system portion to provide one or more network functions forming one or more network services for user equipment, the network including a network interface to monitor data representing network resource requests and traffic to and from the user equipment for the or each network function, and an analytics module to generate data representing one or more traffic patterns for the or each network function using the network resource requests and traffic data, the network being operable to scale the or each network service in response to a predicted variation in user equipment load by deploying, in parallel, one or more virtual machines for respective ones of selected network elements of the multiple network elements executable in respective virtual machine (VM) instances of the virtualised system portion. The network interface can receive data representing parameters and events for traffic flow and bandwidth utilization for the network elements. The analytics module can compare the or each traffic pattern for the network function to multiple predetermined patterns and to determine a match. The analytics module can use the match to extrapolate a current traffic volume into an expected traffic volume for a given next period of time for the or each network function.

According to an example, there is provided a computer program product, comprising a computer usable medium having computer readable program code embodied therein, said computer readable program code adapted to be executed to implement a method for scaling one or more network functions as provided herein.

### BRIEF DESCRIPTION OF THE DRAWINGS

Embodiments will now be described, by way of example only, with reference to the accompanying drawings, in which:
Figure 1 is a schematic representation of a comparison between current elasticity performed in the Cloud (1a) and a method according to an example (1b);
Figure 2 is a schematic representation of a method according to an example; and
Figure 3 is a schematic representation of a system according to an example.

### DESCRIPTION

Example embodiments are described below in sufficient detail to enable those of ordinary skill in the art to embody and implement the systems and processes herein described. It is important to understand that embodiments can be provided in many alternate forms and should not be construed as limited to the examples set forth herein.

Accordingly, while embodiments can be modified in various ways and take on various alternative forms, specific embodiments thereof are shown in the drawings and described in detail below as examples. There is no intent to limit to the particular forms disclosed. On the contrary, all modifications, equivalents, and alternatives falling within the scope of the appended claims should be included. Elements of the example embodiments are consistently denoted by the same reference numerals throughout the drawings and detailed description where appropriate.

The terminology used herein to describe embodiments is not intended to limit the scope. The articles "a," "an," and "the" are singular in that they have a single referent, however the use of the singular form in the present document should not preclude the presence of more than one referent. In other words, elements referred to in the singular can number one or more, unless the context clearly indicates otherwise. It will be further understood that the terms "comprises," "comprising," "includes," and/or "including," when used herein, specify the presence of stated features, items, steps, operations, elements, and/or components, but do not preclude the presence or addition of one or more other features, items, steps, operations, elements, components, and/or groups thereof.

Unless otherwise defined, all terms (including technical and scientific terms) used herein are to be interpreted as is customary in the art. It will be further understood that terms in common usage should also be interpreted as is customary in the relevant art and not in an idealized or overly formal sense unless expressly so defined herein.

In a system in which multiple VMs are deployed, each executing a (or part of a) network element of a network function or part of a network function for example, typical cloud metrics such as CPU load for example, can indicate that an individual VM (network element) or a multiplicity of VMs belonging to the same network element has/have reached a capacity limit. Each network element can then individually resolve this by stepwise scaling out another new instance. That is, the number of VMs for the element or function in question can be scaled by instantiating (or deploying) another VM in order to increase the capacity for the function. As overcapacity is detected, a VM, such as an idle or underutilized VM for example, can be deleted.

However, stepwise scaling can result in under provisioning as each of the network element takes some time until it will receive its fair share as load is balanced across the available visualized resources. Also over-provisioning may occur - for example, since scaling is typical relatively slow given the time it takes, on average, to instantiate a new VM instance, another network element may become overloaded. That element may then be scaled, although a new instance may subsequently become available to take the additional load, thereby resulting in overprovisioning.

Typically, telecommunication networks and systems that provide services (such as those of the Evolved Packet Core - EPC and IP Multimedia Subsystem - IMS, Content Delivery Network - CDN, and so on) can be arbitrarily complex. They can consist of different Network Elements (NEs) that are "chained" together to provide the desired overall service or network function. The relationships between the elements of such a service chain vary depending on the temporal patterns and specific traffic mixes correlated to those chains. For example in an IMS network, during office hours more multiparty video calls may be expected than during the evening hours, which in contrast might show an increase in IP messaging traffic.

As video traffic requests more resources on the media plane, while messaging can be handled on the control plane only, different scaling rules of the service chains can be deployed. According to an example, a method and system for a virtualised system that leverages the use of traffic patterns, including their temporal and positional variations, can be used to provide scaling of resources in a predictive manner, whereby to minimize resource utilization and provide a desired service availability for end-users. For a multiplicity of network elements and given a number of available measurements both from application and platform metering points, a number of instances can be scaled in parallel in order to scale a network service (or function) that is composed of multiple network elements that are functionally linked and which are executable in respective VM instances of the virtualised system portion in response to a predicted variation in network traffic. A service chain can therefore comprise multiple network elements that are selected and functionally linked so as to act upon data in order to process the data to provide the service to an end user. Given a set of network elements, multiple different services and/or network functions can be provided by selecting different sub-sets of network elements, and perhaps varying the order in which data is processed by respective ones of the selected elements. That is, for example, selected network elements can form a computational topology that forms a network function. One or more network functions, which may be linked in a specific topology themselves, can provide a service for the network of system.

Accordingly, a scaling mechanism according to an example concurrently scales an entire set of related service elements (e.g. virtual machines) to provide a desired target capacity for a service. That is, a network function, that may provide a service or that may be part of a wider set of functions that cooperate to provide a service for end users, and which is composed of multiple network elements, respective ones of which are executable in VMs that can be individually scaled according to variations in load, can be elastically scaled by deploying, in parallel, one or more selected additional VMs for each network element of the function. This is in contrast to scaling individual network elements for a function in response to individual load measurements of VMs.

According to an example, there is provided a method and a system for unified metering and analytics of multiple information sources from different network elements. Application performance indicators that can be related to multiple dependent network elements that can be scaled in a combined and concurrent manner can be used. These dependencies can be described by a formal model for example. Performance indicators and service models can be correlated using statistical analytics methods and pattern recognition modules in order to determine the number of additional instances that need to be deployed in parallel. The parallel scaling of multiple network elements and infrastructure adaptation can be managed at the network and/or application level in order to evenly split traffic on existing and scaled out instances.

In an example, a network interface monitors network resource requests from user equipment and/or other network elements for the or each network function to provide data for an analytics module operable to collect and process actual traffic and load information received through the interface from the platform and the application services (CPU, memory and network usage, number of concurrent session, traffic per service class, alarms, and so on). In an example, the analytics module is operable to:
a.) Decompose the data into traffic patterns correlated to the individual service type;
b.) Match the actual patterns with pre-determined patterns that have been previously built from historical data, traffic models or other sources; and
c.) Determine for each service chain the number of required resources of each service element to fulfill the expected load.

In an example, a service orchestration manager can scale multiple instances in parallel by:
a.) Requesting a number of computing and networking resources from the infrastructure that are able to handle a predicted load. Additionally, this can include determining a datacenter location (supposing a distributed cloud infrastructure for example);
b.) Assigning, in parallel for each of the resources, one or more instance(s) of one network element (also considering the location and communication patterns) and deploying application software that may be needed to be started and configured. Multiple resources may receive the same application software, i.e. it becomes another VM of the same type;
c.) Receiving from the new instances notification of the state of the individual deployment process; and
d.) Adapting the current network and application configuration with each of the new elements as they notify that they are operational to receive traffic.

Depending on the complexity of the deployment process, steps c.) and d.) may be iterated several times.

In an example, the service orchestration manager may decide to start more instances (instantiate more VMs) for deployment than actually needed in order cover variation of the setup times, for example instead of starting 5 instances that are needed the service manager may start 8 instances. After the first 5 instances appear operational, the deployment of the remaining instances can be terminated. Thus the setup time may be additionally reduced.

The predefined patterns used by the analytics module can be stored using a specific representation format (e.g. XML-Data, Fourier transform coefficients) in a computer readable form in a database or a file system for example. Alternatively, a generating model e.g. realized as a computer implemented program that allows the generation of the corresponding patterns or representation format from a parameter set (e.g. number of users, typical number of call attempts per user, etc.) can be used.

The system can additionally receive data from the monitoring sub-system passed through the analytics module, which is responsible for extracting the relevant information out of the raw measurement data and separating the information for the different traffic types that are currently present in the system. Raw measurement may include number of bytes transmitted, number of open network connections, free memory space, spent CPU cycles and so forth.

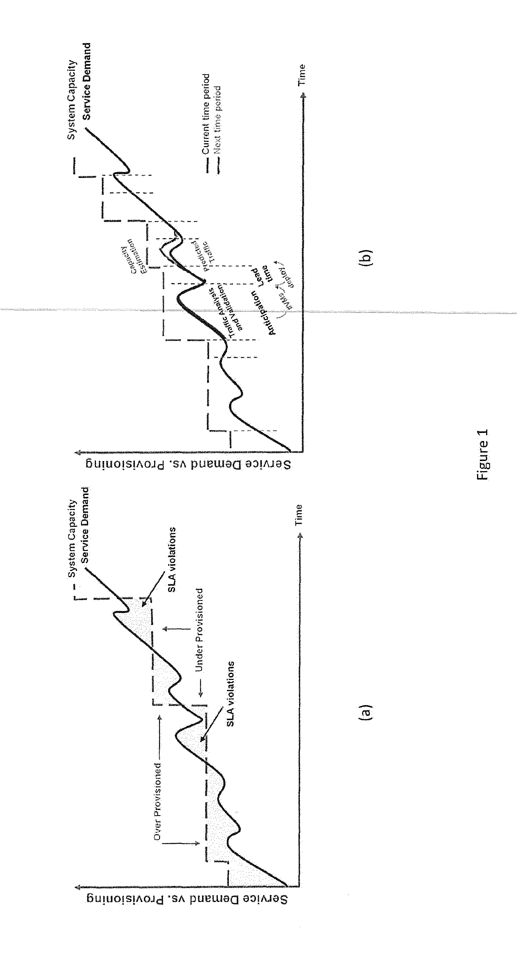

Figure 1 is a schematic representation of a comparison between (a) current elasticity performed in the Cloud and (b) a method according to an example.

The lack of service information in the reactive approach of figure 1(a) can lead to situations in which the provisioned capacity is not enough to keep to the desired SLAs levels unless an extra sparse capacity is reserved to deal with the delays inherent to the solution.

On the other hand, using traffic and service knowledge allows changes in the demand to be anticipated providing traffic models and service configurations match, within certain limits, the real traffic and service chains (dependencies) deployed in the system. An anticipative mechanism according to an example can determine, for each time period, the number of instances to fulfill the demand (#VMs in figure 1b) and trigger corresponding scaling decisions in a parallel scaling manager function.

As scaling is typically not completed immediately (for example, a typical delay of 1-10 minutes in current Cloud technologies may be experienced for a VM), scaling may need an additional lead-time according to the instantiation time of the VMs. However, according to an example, the concurrent instantiation of extra capacity (that is, additional VMs) for all network elements of a service chain even when all/some of the VMs associated with an element are not bottlenecked yet, is performed. This is in contrast to current Cloud orchestration mechanisms that scale new VMs piecemeal only when the capacity limits have been reached in the existing ones.

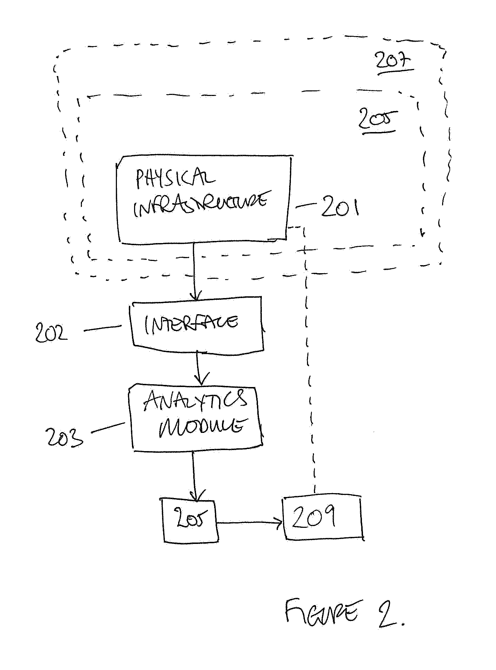

Figure 2 is a schematic representation of a method according to an example. An analytics module 203 receives information via a network interface 202 from an infrastructure service such as a cloud IaaS platform. This information contains data collected at the physical servers 201 of a virtualized portion 205 of a telecommunications network 207, and can include data representing CPU load, Memory footprint, or accumulated network traffic and bandwidth utilization for example.

In an example, the data can be in the form of a report, which can be received by providing a webserver to which the reports can be sent using a REST commands over HTTP connections for example. Alternatively, the system may request the data from the host system using an API provided by the IaaS solution. In an example, data received in either form is agnostic to the application.

Alternatively or additionally, the analytics module 203 can receive information directly from an application that is executing e.g. in VMs running on the physical infrastructure 201. This information comprises e.g. application specific resource utilization like the number of used ports on the VMs network interface, the actual backlog of received, but not processed service requests, or the number of active sessions. As this information is application specific it can have dedicated format like an XML-data or JSON-object description to enable it to be further processed. In an example, the information can contain a percentage of the maximum in order to make the further processing independent from changing ordinal numbers. The system can provide a restful interface to which the VMs can provide their reports or requests the information through addressing a corresponding interface in the application software.

All information received may be stored in a temporary storage residing e.g. in the main memory of a server that is part of the infrastructure 201. Filters may be applied to smooth the individual reports over a time series, in order not to react on random spikes, or accumulate and/or correlate multiple (independent) messages into a single data value.

As a result the system can generate an accumulated report comprising a multitude of parameters and events. This report comprises information of all instances belonging to one or multiple service chains. In an example, a service dependency can be a set of different VM instances that hold functions which are in a direct relationship with each other. This relationship means that for a message passing one service element at least one or more messages will pass a second dependent service element. These messages pass with a given probability either immediately or at a given time in the future. Within the application a multitude of such service dependencies may exist.

Such a service dependency can be defined either by a graphical representation, an XML format or an ABNF-Grammar or similar format. For each dependency the requirements on the constraint resources in form of numerical values can be defined. The analytics module 203 processes received data and retrieves the contribution of each of these service chains to a total load of the system. Alternatively, a linear program that de-correlates the measurements received in the reports into the individual contribution of the service chain can be used. As an outcome the analytics module 203 will provide a report 205 upon the individual contribution of each service chain to the overall traffic mix of the system.

In an example, data is matched against service models in order to extrapolate the current traffic volume into an expected traffic volume for a given next period of the system. The result of this step is list of service chains contributing to the service mix, and it is therefore possible to scale one or more service chains in order to cope with a predicted variation in network traffic by deploying, in parallel, one or more virtual machines for respective ones of selected network elements that go to make up the or each network function providing the service chain.

As described above such a prediction model can be stored as an XML-File, a set of Fourier parameters determining the primary frequency components or a representation of the parameters for generation model for example.

Finally, the system determines the number of virtual machines in each service chain based on the profiles information stored in the data base. This means for each element in each service chain an upper boundary of virtual machines needs to be determined and the number of VMs needed to serve the expected traffic volume can be determined.

A re-configuration description can therefore be provided that can be used with a service update function to deploy new VM instances to serve increasing traffic or to remove instances to release resources that can then be used for other applications. The scaling can be implemented using service orchestration manager 209, which can, for example, provide instructions to a hypervisor to spin up (or down) one or more VM instances as desired in view of the predicted load.

Additionally the analytics module 203 can provide an indicator to the service update function if the traffic pattern received deviates substantially from the expected traffic pattern. In this case a reactive reconfiguration of the service can be applied.

In an example, the service update function can be realized using a computer implemented program that generates the platform dependent scripts, like "Heat" or any other service orchestration method that is understood by the IaaS subsystem.

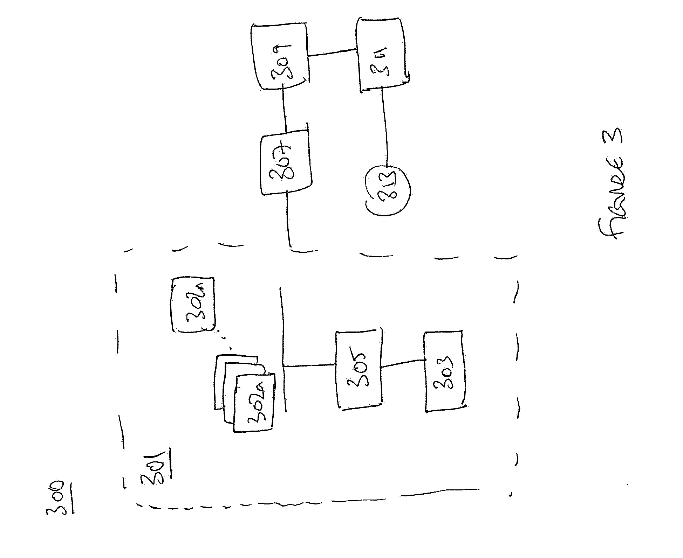

Figure 3 is a schematic representation of a system according to an example. A telecommunications network 300 includes a virtualised system portion 301. The portion 301 includes multiple VMs 302a-n in program execution on physical computing hardware 303 supported by a hypervisor 305. Respective ones of the VMs are operable to execute multiple applications or application parts for one or more network functions. That is, each VM 302a-n represents a network element or part thereof. Multiples ones of the network elements are functionally linked to provide a network function, which network function may be or form part of a service dependency for the system 300. Put another way, a service of the network 300, can be implemented using multiple network elements that cooperate to process data to provide an output. For example, in the case of multiparty video calls, a first network element executing in a first VM may process data from user equipment to provide a video component of a video call, and a second network element executing in a second VM functionally linked to the first VM may process the data to provide an audio component of the video call. Thus, the two functionally linked network elements operate to perform a network function/service.

A network interface 307 is provided to monitor network resource requests for the or each network function, and an analytics module 309 is used to generate data 311 representing one or more traffic patterns 313 for the or each network function using the network resource requests. The system 300 is operable to scale the or each network function in response to a predicted variation in network traffic by deploying, in parallel, one or more virtual machines for respective ones of selected network elements.

Aspects uniquely enhance the capability of a service aware scaling of resources by adding knowledge that supports the proactive provisioning of service elements automatically following predictable patterns in the traffic mix. It enables cloud based deployment of telecommunication services that preserve the rigid service level agreements requested by telecommunications operators at minimal over-provisioning. The automatic reconfiguration enables new flexibilities and shifts expenses from capital investments towards operational costs. Implementing scaling along dependent service functions ("a service chain") according to an example can boost the typical resource utilization of systems in which service chaining plays an important role, because the over-provisioning of the resources of each individual network element (typical telecommunication systems utilize much less than 50% of the deployed resources) can be substantially reduced.

Thus, according to an example, it is possible to proactively and optimally adapt all the functions along the "service chain" as a whole ahead of time, taking in to account knowledge available from service modeling or on-line analytics, while current solutions either overprovision the system or adapt only reactively. Taking into account the traffic mixes and the temporal and/or spatial variety of the service chain improves the resources utilization by at least a factor of two and reduces the required number of the resources dramatically and leads to much lower cost than scaling the individual functions independently. Additional effects result from the multiplex gains where cloud resources can be shared by different network elements in disjoint service chains.

As used herein, the term virtual machine is not intended to be limiting. For example, a virtual machine can be in the form of an execution environment in the form of a container, or by way of OS-level virtualization for example. Accordingly, different isolated containers, or namespaces, or execution environments, residing in the same OS, but sufficiently isolated so that they are essentially executing in an exclusive OS environment can be used.

The present inventions can be embodied in other specific apparatus and/or methods. The described embodiments are to be considered in all respects as illustrative and not restrictive. In particular, the scope of the invention is indicated by the appended claims rather than by the description and figures herein. All changes that come within the meaning and range of equivalency of the claims are to be embraced within their scope.

## Claims

1. A method, in a virtualised system portion of a telecommunications network, for scaling one or more network functions forming at least one network service in response to a predicted variation in network traffic, the or each network function comprising multiple network elements executable in respective virtual machine (VM) instances of the virtualised system portion, the method comprising:
monitoring network resources and traffic to determine the actual load of the or each network function;
generating data representing one or more traffic patterns for the or each network function;
scaling the or each network service by deploying, in parallel, one or more virtual machines instantiated over physical hardware of the network for respective ones of selected network elements of the multiple network elements.

2. A method as claimed in claim I, wherein the selected network elements are functionally linked network elements being operable to provide the service for the predicted variation in network traffic.

3. A method as claimed in claim 1 or 2, wherein monitoring network resources for the or each network function includes:
receiving data representing parameters and events for traffic flow and bandwidth utilization for the network elements.

4. A method as claimed in any preceding claim, wherein the or each traffic pattern for the network function is compared to multiple predetermined patterns to determine a match.

5. A method as claimed in claim 4, further including:
using the match to extrapolate a current traffic volume into an expected traffic volume for a given next period of time for the or each network function.

6. A system including multiple virtual machines (VMs) in program execution on physical computing hardware supported by a hypervisor, respective virtual machines operable to execute multiple applications or application parts for one or more network functions of a virtualised system portion of a telecommunications network, the system including:
a network interface to monitor network resources and traffic for the or each network function; and
an analytics module to generate data representing one or more traffic patterns for the or each network function using the network resource requests;
wherein the system is operable to scale the or each network function in response to a predicted variation in network traffic by deploying, in parallel, one or more virtual machines for respective ones of selected network elements of the multiple network elements.

7. A system as claimed in claim 6, wherein the network interface is operable to receive data representing parameters and events for traffic flow and bandwidth utilization for the network elements.

8. A system as claimed in claim 6 or 7, wherein the analytics module is operable to compare the or each traffic pattern for the network function to multiple predetermined patterns and to determine a match.

9. A system as claimed in claim 8, wherein the analytics module is operable to use the match to extrapolate a current traffic volume into an expected traffic volume for a given next period of time for the or each network function.

10. A telecommunications network including a virtualised system portion to provide one or more network functions forming one or more network services for user equipment, the network including:
a network interface to monitor data representing network resource requests and traffic to and from the user equipment for the or each network function; and
an analytics module to generate data representing one or more traffic patterns for the or each network function using the network resource requests and traffic data;
the network being operable to scale the or each network service in response to a predicted variation in user equipment load by deploying, in parallel, one or more virtual machines for respective ones of selected network elements of the multiple network elements executable in respective virtual machine (VM) instances of the virtualised system portion.

11. A telecommunications network as claimed in claim 10, wherein the network interface is operable to receive data representing parameters and events for traffic flow and bandwidth utilization for the network elements.

12. A telecommunications network as claimed in claim 11, wherein the analytics module is operable to compare the or each traffic pattern for the network function to multiple predetermined patterns and to determine a match.

13. A telecommunications network as claimed in claim 12, wherein the analytics module is operable to use the match to extrapolate a current traffic volume into an expected traffic volume for a given next period of time for the or each network function.

14. A computer program product, comprising a computer usable medium having computer readable program code embodied therein, said computer readable program code adapted to be executed to implement a method for scaling one or more network functions as claimed in any of claims 1 to 5.
